# EUROPÄISCHE PATENTSCHRIFT

(11) **EP 2 100 693 B1**
(45) Veröffentlichungstag und Bekanntmachung des Hinweises auf die Patenterteilung: **14.09.2011**
(21) Anmeldenummer: 08004574.3
(22) Anmeldetag: 12.03.2008
(51) Int. Cl.: B23Q 1/01

(54) **Bearbeitungsvorrichtung**
Processing device
Dispositif de traitement

(43) Veröffentlichungstag der Anmeldung: 16.09.2009
(73) Patentinhaber: Weeke Bohrsysteme GmbH, 33442 Herzebrock-Clarholz (DE)
(72) Erfinder: Heimann, Reinhard, 33332 Gütersloh (DE); Brinkhaus, Werner, 33378 Rheda-Wiedenbrück (DE)
(74) Vertreter: HOFFMANN EITLE

(56) Entgegenhaltungen:
- EP-A- 0 194 173
- DE-A1- 2 521 036
- GB-A- 1 556 941
- US-A- 3 800 636

## Beschreibung

### Technisches Gebiet

Die Erfindung betrifft eine Bearbeitungsvorrichtung zum Bearbeiten von Werkstücken, die bevorzugt zumindest teilweise aus Holz, Holzwerkstoffen, Kunststoff oder dergleichen bestehen, nach dem Oberbegriff von Anspruch 1.

### Stand der Technik

Bearbeitungsvorrichtungen der eingangs genannten Art werden bei der Bearbeitung und Herstellung von Werkstücken in der Möbel- und Bauelementeindustrie und anderen Industriezweigen verbreitet eingesetzt. Diese Maschinen können beispielsweise zum spanenden Bearbeiten, Beschichten, Kantenanleimen oder vielfältige andere Veredelungsvorgänge der Werkstücke genutzt werden. Die Bearbeitungseinheiten dieser Maschinen sind üblicherweise an einem Maschinenbett aufgebaut, das traditionell aus Stahl bzw. Stahlblech hergestellt wird. Die zunehmenden Bearbeitungsgeschwindigkeiten und hiermit verbundenen dynamischen Kräfte der Bearbeitungsmaschinen führen dazu, dass das Schwingungsverhalten des die Bauteile der Maschine tragenden Maschinenbetts kontinuierlich an Bedeutung gewinnt. Vor diesem Hintergrund wurde vorgeschlagen, das Maschinenbett aus Mineralguss herzustellen, d.h. einem Gemisch aus einem synthetischen Bindemittel und Zuschlagstoffen (vgl. beispielsweise DE 20 2006 019 323 U1).

Als Alternative hierzu kamen zuletzt auch Maschinenbetten zum Einsatz, die teilweise aus Stahlbeton bestehen. So vertreibt beispielsweise die Anmelderin ein CNC-Portalbearbeitungszentrum vom Typ Vantage 33M, bei welchem eine rechteckige Stahlbetonplatte auf einem Untergestell aus Stahlblech angeordnet ist, um das Maschinenbett zu bilden. Dabei wird unter Beton im Rahmen der vorliegenden Anmeldung zementgebundener Beton verstanden.

Die rechteckige Stahlbetonplatte des bekannten CNC-Portalbearbeitungszentrums hat sich in der Praxis aufgrund ihrer hohen Steifigkeit und ihres hohen Eigengewichts bewährt. Allerdings hat sich gezeigt, dass sich eine derartige Stahlbetonplatte nur schwierig an unterschiedliche Maschinentypen anpassen lässt bzw. für jeden Maschinentyp eine eigene Schalung zum Gießen des Stahlbetonkörpers hergestellt werden muss. Dies führt neben einer geringen Flexibilität zu einem hohen Investitionsaufwand und Platzbedarf sowie einem aufwändigen Produktionsprozess.

Als weiterer Stand der Technik ist das Dokument US 3,800,636 A1 bekannt, das ein aus Stahlbeton hergestelltes Maschinenbett betrifft bei dem ein flächiger Abschnitt sowie Rippen vorgesehen sind.

Als weiteres Dokument ist die Offenlegungsschrift DE 25 21 036 A1 bekannt, die ein Werkzeugmaschinenbett aus Beton betrifft, das zur Erhöhung der Mobilität in mehrere einzelne Blöcke unterteilt wurde, die bei der Montage wiederum formschlüssig zusammengefügt werden.

### Darstellung der Erfindung

Es ist daher Aufgabe der vorliegenden Erfindung, eine gattungsgemäße Bearbeitungsvorrichtung bereitzustellen, deren Maschinenbett sich aus Bauteilen herstellen lässt, die einen einfachen Aufbau besitzen und vielseitig, d. h. für unterschiedliche Maschinentypen, verwendbar sind.

Diese Aufgabe wird erfindungsgemäß durch eine Bearbeitungsvorrichtung nach Anspruch 1 gelöst. Besonders bevorzugte Weiterbildungen der Erfindung sind in den abhängigen Ansprüchen angegeben.

Der Erfindung liegt der Gedanke zugrunde, mit einer geringen Anzahl von Betonbauteilen Maschinenbetten für unterschiedlichste Maschinenarten herstellen zu können. Zu diesem Zweck ist erfindungsgemäß vorgesehen, dass der Grundkörper einen bevorzugt flächigen Basisabschnitt und mindestens einen winklig hierzu vorgesehenen Schenkelabschnitt aufweist.

Gemäß der Erfindung ist es vorgesehen, dass der Grundkörper mehrteilig mit mehreren Abschnitten ausgebildet ist. Hierdurch lässt sich der Grundkörper nach Art eines Baukastensystems aufbauen, sodass beispielsweise (Stahl-)Betonkörper mit einfacher Geometrie in einfachen Schalungen vorgefertigt und gegebenenfalls auf Lager produziert werden können, um diese Abschnitte anschließend in Abhängigkeit von der gewünschten Maschinenkonfiguration zu einem Grundkörper zusammenzusetzen. Hierdurch lässt sich bei einfacher Herstellung eine maximale Flexibilität erreichen, während gleichzeitig eine praktisch sofortige Verfügbarkeit des gewünschten Grundkörpers sichergestellt werden kann.

Weiter ist es vorgesehen, dass mindestens ein Schenkel des Grundkörpers nachträglich mit dem bevorzugt flächigen Basisabschnitt des Grundkörpers verbunden ist. Diesem Konzept liegt die Erkenntnis zugrunde, dass sich die Variabilitätsanforderungen der hier zur Rede stehenden Bearbeitungsvorrichtungen primär in vertikaler Richtung konzentrieren, sodass eine Kombinierbarkeit eines bestimmten Grundkörpers mit unterschiedlichen Schenkeln eine optimale Variabilität ergibt.

Auf diese Weise wird es möglich, den Grundkörper in einer ersten Ausrichtung (z. B. Schenkel nach oben) als Maschinenbett für einen sogenannten Konsolentisch zu verwenden, und in einer zweiten Ausrichtung (z. B. Schenkel nach unten) als Maschinenbett für eine sogenannte Tischmaschine zu verwenden.

Hierdurch lässt sich die Produktion hochgradig standardisieren, so dass beispielsweise mit weniger Schalungselementen bzw. im Extremfall nur einem Schalungselement für den Beton gearbeitet werden kann. Hierdurch lassen sich nicht nur die Investitionskosten und der Platzbedarf vermindern, sondern es lassen sich auch Fehlerquellen und Streuungen vermeiden.

Gemäß einer Weiterbildung der Erfindung ist vorgesehen, dass der Grundkörper mindestens zwei Schenkelabschnitte aufweist, sodass der Grundkörper bevorzugt einen im Wesentlichen u-förmigen oder dreiecksförmigen Querschnitt aufweist. Auf diese Weise lassen sich die obigen Vorteile mit einer besonders geringen Anzahl von Zusatzbauteilen erzielen. So kann beispielsweise ein Grundkörper mit einem u-förmigen Querschnitt ohne zusätzlichen Unterbau bzw. Überbau eine Tischmaschine bzw. Konsolenmaschine herstellen lässt. Ähnliche Vorteile lassen sich auch mit einem dreiecksförmigen Querschnitt erzielen, wobei diese Querschnittsform zusätzlich eine besonders hohe Stabilität besitzt. Auf diese Weise ermöglicht das Vorsehen von mindestens zwei Schenkelabschnitten eine hohe Variabilität bei geringem Herstellungsaufwand und hoher Stabilität.

Gemäß einer Weiterbildung der Erfindung ist ferner vorgesehen, dass der Grundkörper mindestens ein Stahlprofil aufweist. Ein derartiges Stahlprofil trägt nicht nur zu einer erhöhten Stabilität und Festigkeit des Grundkörpers bei, sondern kann darüber hinaus auch als genau definierte Aufstandsfläche oder präzise Führung für bewegliche Maschinenelemente dienen. Dabei ist es besonders bevorzugt, dass das mindestens eine Stahlprofil einbetoniert ist, um eine sichere Verbindung zwischen dem Stahlprofil und dem angrenzenden Beton zu erzielen. Es ist jedoch ebenso denkbar, das Stahlprofil beispielsweise an dem angrenzenden Beton anzukleben oder auf andere Weise nachträglich anzubringen. Hierdurch lässt sich die Variabilität des Grundkörpers erhöhen und gegebenenfalls eine präzisere Positionierung des Stahlprofils erreichen, was insbesondere bei einer Verwendung des Stahlprofils als Führung oder Aufstandsfläche vorteilhaft ist.

Insbesondere für diese Anwendungsfälle ist es vorteilhaft, wenn gemäß einer Weiterbildung der Erfindung das mindestens eine Stahlprofil an einer Oberfläche des Grundkörpers angeordnet ist, insbesondere im Bereich eines freien Endes oder einer Ecke des Grundkörpers. Ferner lässt sich eine derartige Ausgestaltung besonders einfach herstellen und schützt den angrenzenden Beton während der Handhabung des Grundkörpers.

Bei dem vorstehend beschriebenen "Baukastenkonzept" können einzelne oder mehrere Teile des Grundkörpers auch aus anderen Materialien als Beton bzw. Stahlbeton bestehen, sodass gemäß einer Weiterbildung der Erfindung mindestens ein Schenkelabschnitt beispielsweise auch ein Stahlprofil aufweisen kann. Hierdurch lassen sich für vielfältigste Anwendungsfälle maßgeschneiderte Lösungen schaffen, die die jeweiligen, hohen Anforderungen an Stabilität, Schwingungsverhalten und Maßgenauigkeit sicher und wirtschaftlich erfüllen können.

Die Verbindung der einzelnen Abschnitte des mehrteiligen Grundkörpers miteinander kann im Rahmen der vorliegenden Erfindung auf unterschiedlichste Art und Weise erfolgen. Gemäß einer Weiterbildung der Erfindung ist jedoch vorgesehen, dass die Abschnitte des Grundkörpers zumindest bereichsweise miteinander verklebt sind. Hierdurch lassen sich die bei Beton bzw. Stahlbeton häufig auftretenden Maßtoleranzen ausgleichen, und es ergibt sich eine einfache Herstellung. Alternativ oder zusätzlich ist es ebenso möglich, die Abschnitte des Grundkörpers zumindest bereichsweise miteinander zu verzahnen, sodass insbesondere in Kombination mit einer Verklebung die Übertragung hoher Beanspruchungen dauerhaft ermöglicht wird. Ferner ist zu beachten, dass zusätzlich zu den zu einer Verklebung und/oder einer Verzahnung gegebenenfalls auch eine Verschraubung oder sonstige Verbindung der Abschnitte vorgesehen werden kann.

Gemäß einer Weiterbildung der Erfindung ist ferner vorgesehen, dass der Grundkörper mindestens eine Ausnehmung oder Profilierung aufweist. Auf diese Weise lässt sich ohne wesentlichen Steifigkeitsverlust eine Gewichtsreduzierung und Materialeinsparung erzielen, sodass das Schwingungsverhalten optimal auf den jeweiligen Anwendungsfall eingestellt und die Wirtschaftlichkeit verbessert werden kann.

Ein vorteilhaftes Verfahren zum Herstellen einer erfindungsgemäßen Verarbeitungsvorrichtung ist Gegenstand von Anspruch 10. Dieses zeichnet sich dadurch aus, dass zunächst mindestens zwei Grundkörperabschnitte hergestellt werden, von denen mindestens einer Beton insbesondere Stahlbeton aufweist. Anschließend werden die Grundkörperabschnitte erfindungsgemäß miteinander zum Bilden des Grundkörpers verbunden, insbesondere zumindest bereichsweise miteinander verklebt. Auf diese Weise lassen sich die oben erläuterten Vorteile des modularen Baukastenprinzips in optimaler Weise verwirklichen.

### Kurze Beschreibung der Zeichnungen

- Fig. 1: zeigt schematisch eine Perspektivansicht einer Bearbeitungsvorrichtung gemäß einer ersten Ausführungsform der vorliegenden Erfindung;
- Fig. 2: zeigt schematisch eine Perspektivansicht einer Bearbeitungsvorrichtung gemäß einer zweiten Ausführungsform der vorliegenden Erfindung;
- Fig. 3: zeigt schematisch eine Perspektivansicht einer Bearbeitungsvorrichtung gemäß einer dritten Ausführungsform der vorliegenden Erfindung;
- Fig. 4: zeigt schematisch eine Perspektivansicht einer Bearbeitungsvorrichtung gemäß einer vierten Ausführungsform der vorliegenden Erfindung;
- Fig. 5: zeigt schematisch eine Perspektivansicht einer Bearbeitungsvorrichtung gemäß einer fünften Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

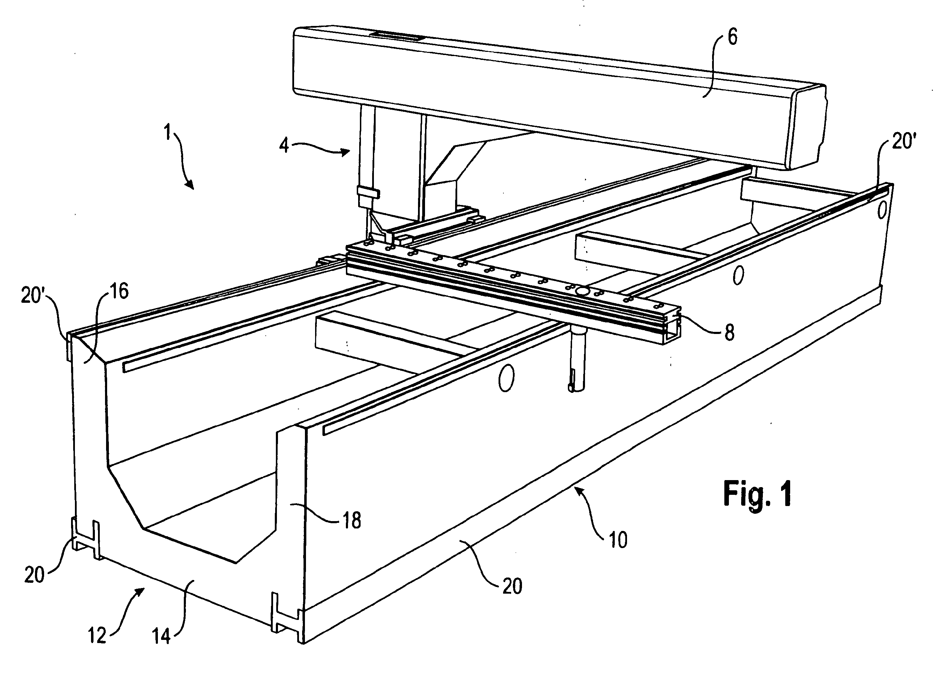

Eine Bearbeitungsvorrichtung 1 als bevorzugte Ausführungsform der vorliegenden Erfindung ist in Fig. 1 schematisch in einer Perspektivansicht dargestellt. Bei der gezeigten Bearbeitungsvorrichtung 1 handelt es sich in der vorliegenden Ausführungsform um ein CNC-Bearbeitungszentrum, obgleich die vorliegende Erfindung nicht hierauf beschränkt ist und auch andersartige Stationär- oder Durchlaufmaschinen erfindungsgemäß ausgestaltet werden können. Die Bearbeitungsvorrichtung 1 dient in der vorliegenden Ausführungsform zum Bearbeiten von Werkstücken 2 (in Fig. 1 nicht gezeigt), die beispielsweise aus Holz, Holzwerkstoffen, Kunststoff oder dergleichen bestehen, wie sie im Bereich der Möbel- und Bauelementeindustrie häufig zum Einsatz kommen. Zu diesem Zweck weist die Bearbeitungsvorrichtung 1 eine Bearbeitungseinheit 4 auf, die in der vorliegenden Ausführungsform durch einen Fahrständer bzw. Ausleger 6 und eine oder mehrere daran vorgesehene Bearbeitungsaggregate (nicht gezeigt) gebildet ist.

Der Fahrständer 4 ist entlang eines Maschinenbetts 10 verfahrbar, das untenstehend eingehender beschrieben wird. Auf dem Maschinenbett sind mehrer Konsolen 8 (von denen in Fig. 1 nur eine gezeigt ist) angeordnet, um die zu bearbeitenden Werkstücke (nicht gezeigt) zu stützen und zu halten, beispielsweise mittels Vakuum- und/oder anderer Spanner. Dabei können die Konsolen 8 in bekannter Weise entlang des Maschinenbetts 10 verstellbar sein.

Das Maschinenbett 10 weist einen Grundkörper 12 auf, der in der vorliegenden Ausführungsform überwiegend aus Stahlbeton hergestellt ist. Unter Beton wird im Rahmen der vorliegenden Erfindung ein zementgebundener Beton verstanden, der beispielsweise nach DIN 1045 hergestellt ist. Dabei kann es sich um normalfesten, hochfesten oder auch ultrahochfesten Beton mit einer Druckfestigkeit von bis zu 200 MPa oder mehr handeln. In diesen Fällen wird der Beton verschiedene, teils synthetische Zusatzstoffe aufweisen, wobei als Bindemittel weiterhin in erster Linie Zement zum Einsatz kommt. Ferner wird unter Stahlbeton im Rahmen der vorliegenden Erfindung ein Beton bezeichnet, der mit schlaffen oder vorgespannten Bewehrungselementen versehen ist, die beispielsweise aus Stahl, aber auch aus anderen Materialien wie Faserverbundwerkstoffen oder dergleichen bestehen können.

Die Geometrie des Grundkörpers 12 ist in der vorliegenden Ausführungsform im Wesentlichen u-förmig ausgestaltet, sodass der Grundkörper 12 einen flächigen Basisabschnitt 14 und zwei winklig hierzu vorgesehene Schenkelabschnitte 16, 18 aufweist. Der Winkel zwischen dem Basisabschnitt und den Schenkelabschnitten kann vielfältig variiert werden, sodass durch eine entsprechende Neigung beispielsweise des Schenkelabschnitts 18 auch ein dreiecksförmiger Querschnitt oder vielfältige andere Querschnitte hergestellt werden können.

Der Grundkörper 12 weist in der vorliegenden Ausführungsform vier Stahlprofile 20, 20' auf, die in den Beton des Grundkörpers 12 einbetoniert sind. Zu diesem Zweck können die Stahlprofile 20, 20' mit geeigneten Verankerungsmitteln wie Kopfbolzen, Schlaufen oder dergleichen versehen sein. Dabei sind die Stahlprofile 20, wie in Fig. 1 zu erkennen ist, derart angeordnet, dass sie als Aufstandsfläche für den Grundkörper 12 dienen, während das Stahlprofil 20' im Bereich des freien Endes des Schenkels 16 derart angeordnet ist, dass es als Führung für die Verfahrbewegung des Fahrständers 6 dienen kann. Darüber hinaus verleihen die Stahlprofile 20, 20' dem Grundkörper zusätzliche Stabilität und Risssicherheit.

Obgleich in Fig. 1 nicht gezeigt, kann der Grundkörper 12 auch mehrteilig ausgestaltet sein, indem beispielsweise die Schenkel 16 und/oder 18 nachträglich mit dem Basisabschnitt 14 verbunden sind, was untenstehend noch näher erläutert wird.

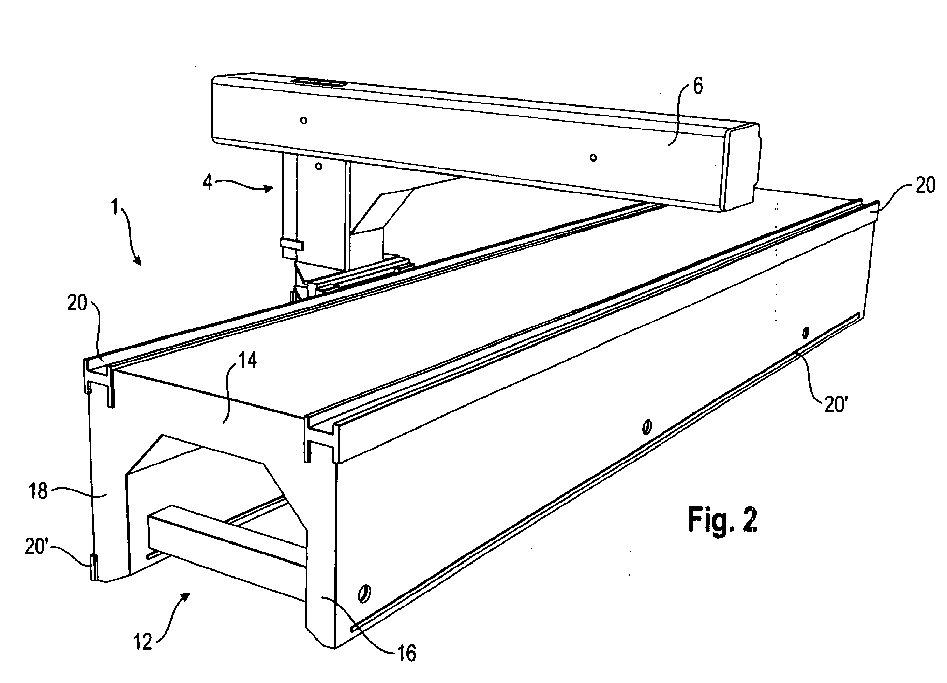

Eine zweite bevorzugte Ausführungsform der erfindungsgemäßen Bearbeitungsvorrichtung ist in Fig. 2 schematisch in einer Perspektivansicht dargestellt. Bei dieser Bearbeitungsvorrichtung 1 kommt im Prinzip derselbe Grundkörper 12 zum Einsatz wie in der ersten bevorzugten Ausführungsform, allerdings wird er in der zweiten Ausführungsform auf dem Kopf stehend angeordnet, um eine Tischmaschine zu ergeben. Der erfindungsgemäße Grundkörper 12 ist daher sehr vielfältig und flexibel einsetzbar, sodass mit einer einzigen Schalung bzw. einem einzigen Satz von Schalungen unterschiedlichste Maschinen hergestellt werden können.

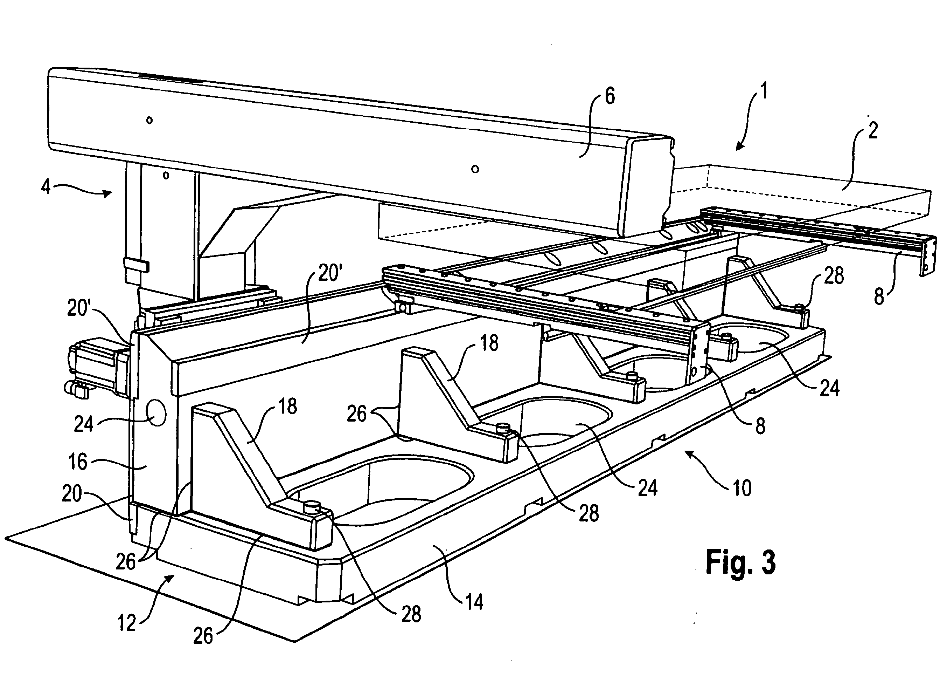

Eine dritte bevorzugte Ausführungsform der vorliegenden Erfindung ist schematisch in Fig. 3 in einer Perspektivansicht dargestellt. Bei dieser Maschine handelt es sich, wie bei der ersten bevorzugten Ausführungsform gemäß Fig. 1, um ein CNC-Bearbeitungszentrum mit einem entlang des Grundkörpers 12 verfahrbaren Fahrständer 6. Zum Abstützen und Fixieren des in Fig. 3 gezeigten Werkstücks 2 sind wiederum Konsolen 8 an dem Grundkörper 12 vorgesehen. Die dritte Ausführungsform unterscheidet sich von den vorherigen Ausführungsformen jedoch durch die Ausgestaltung des Grundkörpers 2, der in der vorliegenden Ausführungsform mehrteilig mit einem Basisabschnitt 14, einem Schenkel 16 und mehreren Querabstützungen 18 gebildet ist. Diese Bauteile sind miteinander zumindest abschnittsweise über eine Klebeschicht 26 verbunden, wobei zur Verbindung der Querabstützungen 18 und des Basisabschnitts 14 zusätzlich Schrauben 28 vorgesehen sind. Ferner können die Verbindungsflächen zwischen den jeweiligen Bauteilen, obgleich in Fig. 3 nicht ersichtlich, zusätzlich Verzahnungen oder Profilierungen aufweisen.

Ferner weist der Grundkörper bei der in Fig. 3 gezeigten Ausführungsform eine Mehrzahl von Ausnehmungen 24 auf, und zwar sowohl im Bereich des flächigen Basisabschnitts 14 als auch im Bereich des Schenkels 16. Auf diese Weise lassen sich Schwingungsverhalten, Eigengewicht und Steifigkeit des Grundkörpers optimal aufeinander abstimmen und gleichzeitig der Materialverbrauch und das Transportgewicht optimieren.

Zur Herstellung des in Fig. 3 gezeigten Grundkörpers werden zunächst die einzelnen Grundkörperabschnitte 14, 16 und 18 in den entsprechenden Schalungen hergestellt, wobei es sich bei den Schalungen bevorzugt um wieder verwendbare Schalungen mit einer hochfesten Schalhaut aus beispielsweise Stahl oder dergleichen handelt. Dabei können, wie bei der in Fig. 1 gezeigten Ausführungsform, bereits die Stahlprofile 20 bzw. 20' in den Basisabschnitt 14 und den Schenkel 16 einbetoniert werden, obgleich auch diese nachträglich an den jeweiligen Bauteilen angebracht, insbesondere angeklebt werden können.

Anschließend werden die Verbindungsflächen für den späteren Verbindungsvorgang vorbereitet und mit der Klebeschicht 26 versehen, um nun die Bauteile 14, 16 und 18 miteinander zu verbinden. Für eine präzise und sichere Verbindung der einzelnen Bauteile können verschiedene Hilfskonstruktionen zum Einsatz kommen, wie beispielsweise Halterahmen, Stützböcke oder dergleichen. Die einzelnen Bauteile können so in einer gewünschten Referenzposition gehalten werden, bei der beispielsweise der Abstand des oberen Stahlprofils 20' vom unteren Stahlprofil 20 definiert ist, wobei die Kleberschicht 26 dann als Toleranzausgleich dient. Auf diese lässt sich ein Grundkörper mit hoch präzisen Abmessungen herstellen, der sich sonst nur mit Stahlbaulösungen realisieren lässt.

Anschließend werden die Bauteile 14, 16 und 18 gegebenenfalls noch miteinander verschraubt oder auf andere Weise kraftschlüssig verbunden, obgleich dies nicht unbedingt erforderlich ist. Im umgekehrten Fall ist zu beachten, dass anstelle eines Verklebens der einzelnen Bauteile 14, 16, 18 auch andere Verbindungstechniken zum Einsatz kommen können, beispielsweise ein bloßes Verschrauben oder sonstiges formschlüssiges Verbinden der Bauteile, etc.

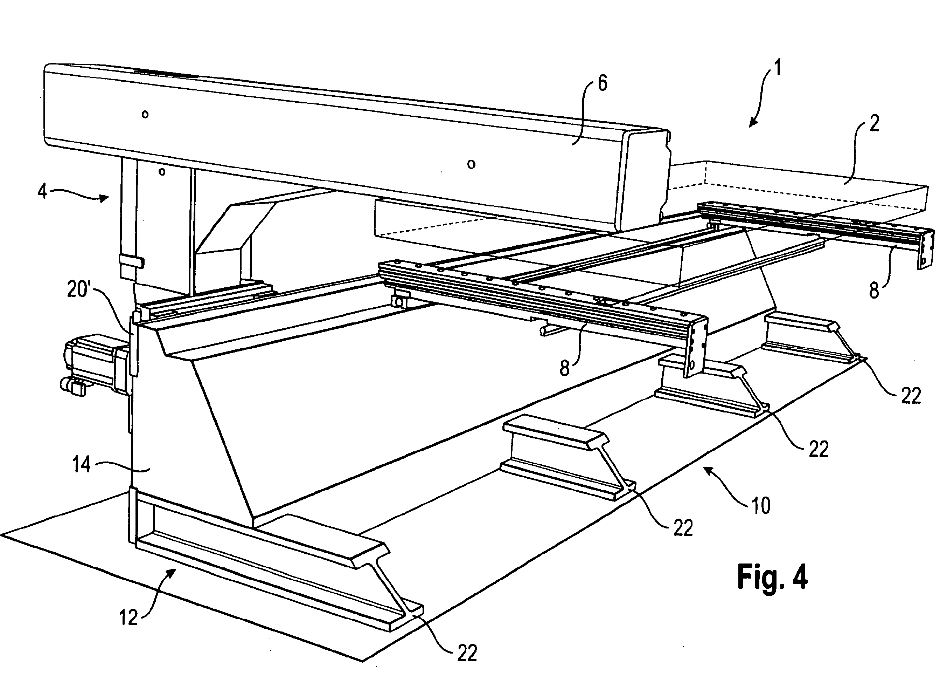

Eine vierte bevorzugte Ausführungsform der vorliegenden Erfindung ist in Fig. 4 schematisch in einer Perspektivansicht dargestellt. Diese unterscheidet sich von den bisher beschriebenen Ausführungsformen primär dadurch, dass der Grundkörper 12 einen hier stehend angeordneten Basisabschnitt 14 und mehrere hiermit verbundene Schenkel 22 aufweist, die durch Stahlprofile gebildet sind. Dabei sind die Stahlprofile 22 in der vorliegenden Ausführungsform in den Basisabschnitt 14 einbetoniert. Es ist jedoch ebenso möglich, die Schenkel 22 nachträglich mit dem Basisabschnitt 14 zu verbinden, beispielsweise zu verkleben, zu verschrauben, etc.

Ferner ist es im Rahmen der vorliegenden Ausführungsform ebenso möglich, den Grundkörper 12 in einer anderen Ausrichtung aufzustellen, beispielsweise mit dem Basisabschnitt 14 nach unten und den Schenkeln 22 vertikal ausgerichtet. In diesem Fall kann an den freien Enden der Schenkel 22 eine geeignete Führung für einen Fahrständer oder auch jede andere Art von Maschinenaufbau angebracht werden. Ferner kann es sinnvoll sein, auch bei dieser Ausführungsform den Basisabschnitt 14 zumindest teilweise hohl bzw. mit Ausnehmungen auszuführen, um ein optimales Verhältnis zwischen Gewicht, Steifigkeit und Schwingungsverhalten zu erzielen.

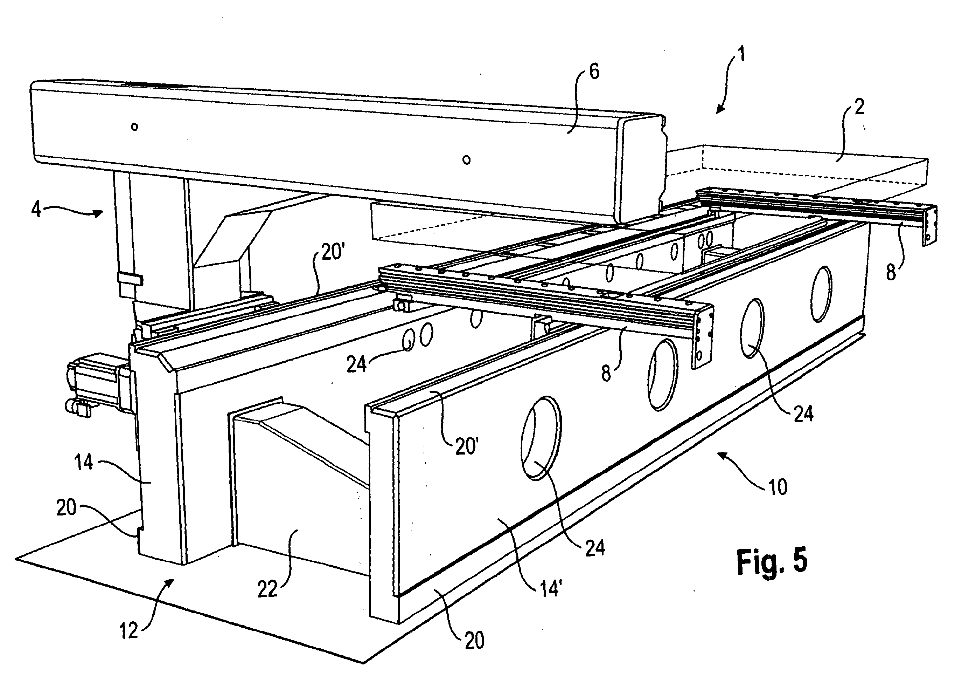

Eine fünfte bevorzugte Ausführungsform der vorliegenden Erfindung ist in Fig. 5 schematisch in einer Perspektivansicht dargestellt. Diese knüpft an das Konzept der in Fig. 4 gezeigten Ausführungsform an, in dem der Grundkörper 12 einen Basisabschnitt 14 und hiermit verbundene (z.B. einbetonierte) Stahlprofile als Schenkel aufweist. Zusätzlich umfasst der Grundkörper 12 jedoch in der vorliegenden Ausführungsform einen zweiten Basisabschnitt 14', der mit dem freien Ende der Stahlträger 22 verbunden ist. Obgleich auch diese Verbindung durch Einbetonieren vorgenommen werden kann, wird es sich in vielen Fällen zur Vereinfachung der Herstellung und gegebenenfalls des Transports anbieten, hier gegebenenfalls eine nachträgliche Verbindung durch Verkleben, Verschrauben, etc. vorzusehen.

Auch dieser Grundkörper kann vorteilhaft in unterschiedlichen Stellungen verwendet werden, der auf den jeweiligen Maschinentyp abgestimmt sein kann, beispielsweise gemäß Fig. 5 für eine Bearbeitungsmaschine mit Konsole 8, oder gegebenenfalls für eine Tischmaschine (nicht gezeigt), dessen Tisch sich dann auf die Basisabschnitte 14, 14' sowie die hierzu bündigen Flächen der Stahlträger 22 abstützen kann.

Bei dem Maschinenbett, das zumindest abschnittsweise aus Beton besteht, kann es sich auch um ein nachträglich durch Beton verlängertes Maschinenbett handeln (z. B. durch Kleben, Schrauben, etc)

## Patentansprüche

1. Bearbeitungsvorrichtung (1) zum Bearbeiten von Werkstücken (2), die bevorzugt zumindest teilweise aus Holz, Holzwerkstoffen, Kunststoff oder dergleichen bestehen, mit:
einem Maschinenbett (10) und mindestens einer mit dem Maschinenbett verbundenen Bearbeitungseinheit (4), wobei das Maschinenbett (10) einen Grundkörper (12) aufweist, der zumindest abschnittsweise aus Beton, insbesondere Stahlbeton besteht, wobei
der Grundkörper (12) einen bevorzugt flächigen Basisabschnitt (14) und mindestens einen winklig hierzu vorgesehenen Schenkelabschnitt (16; 22) aufweist,
**dadurch gekennzeichnet, dass**
der Grundkörper (12) mit dem Basisabschnitt (14) und dem mindestens einen Schenkelabschnitt (16, 22) mehrteilig ausgebildet ist, wobei
mindestens ein Schenkelabschnitt (16, 18, 22) des Grundkörpers (12) mit dem bevorzugt flächigen Basisabschnitt (14) des Grundkörpers (12) nach deren jeweiliger Herstellung verbunden sind.

2. Bearbeitungsvorrichtung nach Anspruch 1, **dadurch gekennzeichnet, dass** der Grundkörper (12) mindestens zwei Schenkelabschnitte (16, 18) aufweist, so dass der Grundkörper (12) bevorzugt einen im wesentlichen u-förmigen oder dreiecksförmigen Querschnitt aufweist.

3. Bearbeitungsvorrichtung nach Anspruch 1 oder 2, **dadurch gekennzeichnet, dass** der Grundkörper (12) mindestens ein Stahlprofil (20, 20') aufweist, das bevorzugt einbetoniert ist.

4. Bearbeitungsvorrichtung nach Anspruch 3, **dadurch gekennzeichnet, dass** das mindestens eine Stahlprofil (20, 20') an einer Oberfläche des Grundkörpers (12) angeordnet ist, insbesondere im Bereich eines freien Endes oder einer Ecke des Grundkörpers.

5. Bearbeitungsvorrichtung nach einem der vorhergehenden Ansprüche, **dadurch gekennzeichnet, dass** mindestens ein Schenkelabschnitt (16) Stahlbeton und/oder ein Stahlprofil (22) aufweist.

6. Bearbeitungsvorrichtung nach einem der vorhergehenden Ansprüche, **dadurch gekennzeichnet, dass** die Abschnitte (14, 16, 18, 22) des Grundkörpers (12) zumindest bereichsweise miteinander verklebt (26) und/oder verzahnt sind.

7. Bearbeitungsvorrichtung nach einem der vorhergehenden Ansprüche, **dadurch gekennzeichnet, dass** der Grundkörper (12) mindestens eine Ausnehmung (24) oder Profilierung aufweist.

8. Verfahren zum Herstellen einer Bearbeitungsvorrichtung (1) nach einem der vorhergehenden Ansprüche, mit den Schritten:
Herstellen mindestens zweier Grundkörperabschnitte (14, 16, 18, 22), die zumindest abschnittsweise Beton, insbesondere Stahlbeton, aufweisen, wobei die Grundkörperabschnitte ein Basisabschnitt (14) und zumindest ein Schenkelabschnitt (16, 22) sind,
Bilden eines Grundkörpers (12) durch Verbinden,
insbesondere zumindest bereichsweises miteinander Verkleben der Grundkörperabschnitte (14, 16, 18, 22) miteinander, wobei der mindestens eine Schenkelabschnitt (16, 22) winklig zum Basisabschnitt (14) vorgesehen wird.

## Claims

1. Machining apparatus (1) for machining workpieces (2) which are preferably at least partially made of timber, derived timber products, plastic or the like, having:
a machine bed (10) and at least one machining unit (4) connected to the machine bed, wherein the machine bed (10) has a main body (12) which in at least one section is made of concrete, in particular reinforced concrete, wherein
the main body (12) has a preferably two-dimensional base section (14) and at least one arm section (16; 22) provided at an angle thereto,
**characterised in that**
the main body (12) with the base section (14) and the at least one arm section (16; 22) is constructed in several parts, wherein
at least one arm section (16, 18, 22) of the main body (12) is connected to the preferably two-dimensional base section (14) of the main body (12) after respective manufacture thereof.

2. Machining apparatus according to claim 1, **characterised in that** the main body (12) has at least two arm sections (16, 18), so that the main body (12) preferably has a substantially U-shaped or triangular cross-section.

3. Machining apparatus according to claim 1 or 2, **characterised in that** the main body (12) has at least one steel profile (20, 20') which is preferably set in concrete.

4. Machining apparatus according to claim 3, **characterised in that** the at least one steel profile (20, 20') is arranged on a surface of the main body (12), in particular in the region of a free end or a corner of the main body.

5. Machining apparatus according to any of the preceding claims, **characterised in that** at least one arm section (16) has reinforced concrete and/or a steel profile (22).

6. Machining apparatus according to any of the preceding claims, **characterised in that** the sections (14, 16, 18, 22) of the main body (12) are in at least one region adhered (26) together and/or interlocked.

7. Machining apparatus according to any of the preceding claims, **characterised in that** the main body (12) has at least one recess (24) or profiling.

8. Method for manufacturing a machining apparatus (1) according to any of the preceding claims, with the steps of:
manufacturing at least two main body sections (14, 16, 18, 22) which in at least one section have concrete, in particular reinforced concrete, wherein the main body sections are a base section (14) and at least one arm section (16, 22),
forming a main body (12) by joining, in particular in at least one region adhering together, the main body sections (14, 16, 18, 22), wherein the at least one arm section (16, 22) is provided at an angle to the base section (14).

## Revendications

1. Dispositif de traitement (1), pour traiter des pièces d'oeuvre (2), composées de préférence, au moins partiellement, de bois, matériaux ligneux, matière synthétique ou analogue, avec :
un banc machine (10) et au moins une unité de traitement (4) reliée au banc machine, le banc machine (10) présentant un corps de base (12), composé au moins par tronçons de béton, en particulier de béton armé,
le corps de base (12) présentant un tronçon de base (14), de préférence plat, et au moins un tronçon de branche (16 ; 22) prévu selon un certain angle par rapport à celui-ci,
**caractérisé en ce que**
le corps de base (12), avec le tronçon de base (14) et le au moins un tronçon de branche (16, 22), est réalisé en plusieurs parties,
au moins un tronçon de branche (16, 18, 22) du corps de base (12) est relié au tronçon de base (14), de préférence plat, du corps de base (12), après leur fabrication respective.

2. Dispositif de traitement selon la revendication 1, **caractérisé en ce que** le corps de base (12) présente au moins deux tronçons de branche (16, 18), de manière que le corps de base (12) présente de préférence une section transversale sensiblement en forme de U ou en forme de triangle.

3. Dispositif de traitement selon la revendication 1 ou 2, **caractérisé en ce que** le corps de base (12) présente au moins un profilé en acier (20, 20'), de préférence intégré dans le béton.

4. Dispositif de traitement selon la revendication 3, **caractérisé en ce que** le au moins un profilé en acier (20, 20') est disposé sur une surface du corps de base (12), en particulier dans la zone d'une extrémité libre ou d'un coin du corps de base.

5. Dispositif de traitement selon l'une des revendications précédentes, **caractérisé en ce qu'**au moins un tronçon de branche (16) est en béton armé et/ou présente un profilé en acier (22).

6. Dispositif de traitement selon l'une des revendications précédentes, **caractérisé en ce que** les tronçons (14, 161, 18, 22) du corps de base (12) sont au moins par zones collés ensemble (26) et/ou dentés.

7. Dispositif de traitement selon l'une des revendications précédentes, **caractérisé en ce que** le corps de base (12) présente au moins un évidemment (24) ou un profilage.

8. Procédé pour fabriquer un dispositif de traitement (1) selon l'une des revendications précédentes, avec les étapes consistant à :
fabriquer au moins deux tronçons de corps de base (14, 16, 28, 22), présentant, au moins par tronçons, du béton, en particulier du béton armé, les tronçons de corps de base étant un tronçon de base (14) et au moins un tronçon de branche (16, 22),
former un corps de base (12) par liaison, en particulier collage au moins par zones ensemble, des tronçons de corps de base (14, 16, 18, 22), le au moins un tronçon de branche (16, 22) étant prévu sous un certain angle par rapport au tronçon de base (14).
